Europäisches Patentamt

European Patent Office

Office européen des brevets

(11) Numéro de publication: **0 215 765**
**A2**

## DEMANDE DE BREVET EUROPEEN

(21) Numéro de dépôt: 86870078.2

(22) Date de dépôt: 02.06.86

(51) Int. Cl.⁴: **A 61 C 8/00**

(30) Priorité: 18.09.85 BE 215597

(43) Date de publication de la demande:
25.03.87 Bulletin 87/13

(84) Etats contractants désignés:
AT BE CH DE FR GB IT LI LU NL SE

(71) Demandeur: **Dury, Georges Emile Ladislas**
**Avenue Franklin Rossevelt 141**
**B-1050 Bruxelles (BE)**

(72) Inventeur: **Dury, Georges Emile Ladislas**
**Avenue Franklin Rossevelt 141**
**B-1050 Bruxelles (BE)**

(74) Mandataire: **Thirion, Robert et al**
**Bureau GEVERS S.A. 7, rue de Livourne Bte 1**
**B-1050 Bruxelles (BE)**

(54) **Implant utilisé en chirurgie osseuse, procédé et dispositif pour la mise en place de cet implant.**

(57) Implant endo-osseux (1) utilisé en chirurgie osseuse, en particulier en chirurgie dento-maxillaire, constitué d'au moins deux éléments (2, 3) destinés à être au moins partiellement noyés dans l'os, l'un de ces éléments, qui s'étendent suivant deux directions transversales et prennent appui l'un sur l'autre, étant soit une tige (8) sur laquelle est fixée une prothèse, soit un implant prothétique (2), procédé et dispositif pour la mise en place de cet implant.

Fig.2.

EP 0 215 765 A2

"Implant utilisé en chirurgie osseuse, procédé et dispositif pour la mise en place de cet implant."

La présente invention a pour objet un implant endo-osseux utilisé en chirurgie osseuse, en particulier en chirurgie dento-maxillaire.

L'invention a principalement pour but de procurer un implant endo-osseux capable d'assurer une excellente tenue d'une prothèse dentaire.

A cet effet, suivant l'invention, l'implant est constitué d'au moins deux éléments destinés à être au moins partiellement noyés dans l'os, l'un de ces éléments, qui s'étendent suivant deux directions transversales et prennent appui l'un sur l'autre, étant soit une tige sur laquelle est fixée une prothèse, soit un implant prothétique.

Suivant une forme de réalisation de l'invention, l'élément avec lequel coopère la tige ou l'implant prothétique susdit présente au moins un évidement dans lequel s'engage une des extrémités de la tige ou de l'implant prothétique.

Suivant une mode de réalisation avantageux de l'invention, l'évidement susdit est taraudé, l'extrémité précitée de la tige ou de l'implant prothétique étant filetée de manière à pouvoir être vissée dans l'évidement présenté par l'élément avec lequel la tige coopère.

Suivant une forme de réalisation particulièrement avantageuse de l'invention, l'élément présente extérieurement au moins une aspérité, telle qu'ailette, s'étendant transversalement à l'axe longitudinal de l'élément.

L'invention a également pour objet un procédé pour la mise en place de l'implant susdit.

Suivant l'invention, ce procédé consiste à trépaner l'os "en tiroir", suivant une direction transversale à celle suivant laquelle s'étendra l'axe longitudinal de la tige ou de l'implant prothéti que susdit, pour que cette trépanation soit pratiquée soit dans la zone médullaire de l'os et dans ses corticales, soit dans la corticale de l'os, à choisir un élément d'une longueur telle qu'il soit au moins en grande partie noyé dans l'os, et à disposer la tige ou l'implant prothétique dans ce dernier, par exemple par trépanation, pour qu'il coopère avec l'élément afin de réaliser un ancrage multidirectionnel et cortical ou pluricortical de l'implant.

L'invention a encore pour objet un dispositif de guidage pour permettre la réalisation aisée et précise des trépanations pour la mise en place de l'implant et pour la mise en oeuvre du procédé susdit.

Suivant l'invention, ce dispositif de guidage comprend une pièce rigide et indéformable en forme de U dont les ailes, parallèles entre elles et perpendiculaires à l'âme, sont agencées pour pouvoir être disposées de part et d'autre de l'os à trépaner, au moins une des ailes susdites et l'âme du U présentant, d'une part, des moyens de fixation de la pièce par rapport à l'os et, d'autre part, des moyens de guidage du trépan suivant deux directions transversales sécantes, directions suivant lesquelles s'étendront les deux éléments précités qui constituent l'implant endo-osseux et qui prennent appui l'un sur l'autre.

D'autres détails et particularités de l'invention ressortiront de la description des dessins annexés au présent mémoire et qui représentent, à titre d'exemples non limitatifs, des formes de réalisation particulières de l'implant et du dispositif suivant l'invention et illustrent le procédé susdit.

La figure 1 est une vue schématique en élévation montrant une forme de réalisation d'un implant suivant l'invention, l'os étant représenté en traits interrompus.

La figure 2 est une vue schématique en perspective montrant une variante de l'implant illustré à la figure 1.

La figure 3 est une vue en coupe montrant en détail l'élément susdit de l'implant.

Les figures 4 à 6 sont des vues en coupe illustrant des variantes de l'implant montré à ladite figure 2.

Les figures 7 et 8 sont des vues en coupe, suivant les lignes VII-VII et VIII-VIII de la figure 3, montrant des détails de l'élément illustré à ladite figure 3.

La figure 9 est une vue en perspective du dispositif de guidage suivant l'invention.

Les figures 10 à 13 sont des vues analogues à la figure 9 et illustrent des variantes du dispositif montré à ladite figure 9.

Dans les différentes figures, les mêmes notations de référence désignent des éléments identiques ou analogues.

L'implant endo-osseux 1 suivant l'invention et illustré aux dessins est destiné à la chirurgie dento-maxillaire. Cet implant est constitué par au moins deux éléments 2 et 3 à noyer partiellement ou totalement dans l'os de telle sorte, d'une part, que leurs axes longitudinaux 2' et 3' soient transversaux et, d'autre part, qu'ils prennent appui l'un sur l'autre pour s'immobiliser mutuellement dans l'os et former ainsi un ancrage indestructible dans ce dernier, l'élément 2 étant soit une tige qui supportera une prothèse, soit un implant prothétique, tandis que l'élément 3, qui lui sera toujours de préférence entièrement noyé dans l'os, est essentiellement constitué par une pièce de section constante, telle que pièce cylindrique ou semi-cylindrique, qui pourra être introduite facilement dans l'os par une trépanation simple.

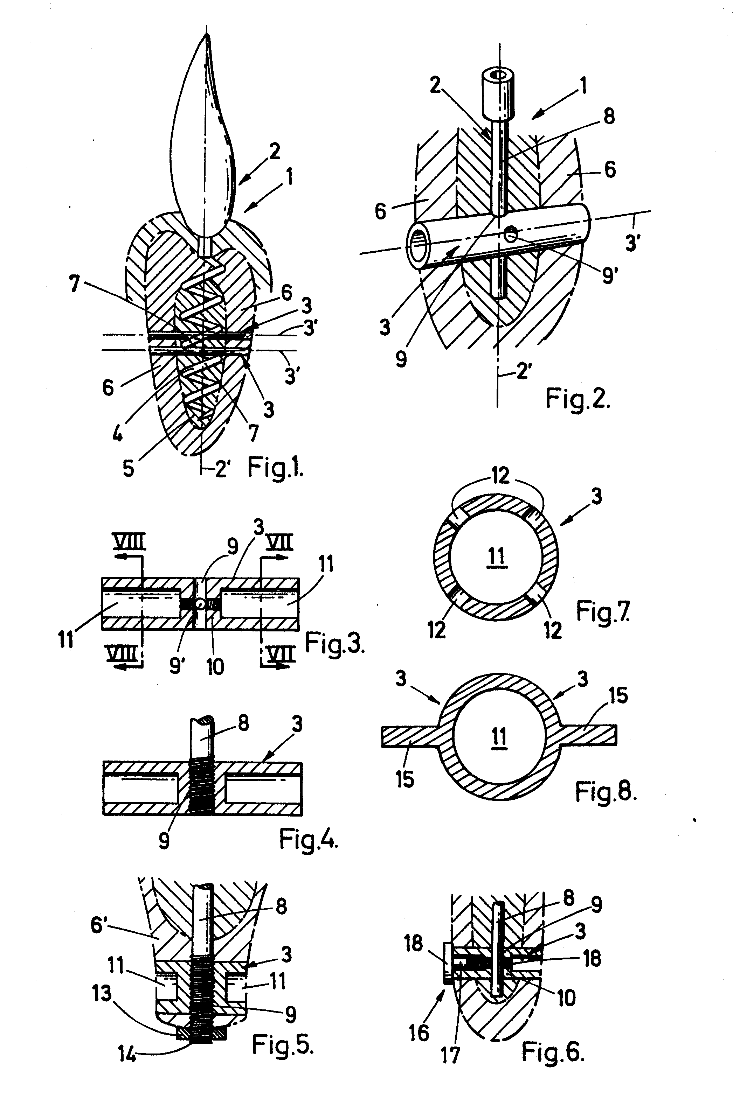

Dans la forme de réalisation de l'implant illustré à la figure 1, l'élément 2 est un implant prothétique spiralé à visser dont l'extrémité 4 est introduite dans la zone médullaire 5 de l'os, tandis que les éléments 3, au nombre de deux, sont placés dans l'os transversalement à l'élément 2 de manière à s'appuyer solidement sur les corticales 6 de l'os et sur les spires 7 de l'élément 2, de part et d'autre de celui-ci, pour l'immobiliser et l'ancrer définitivement en position choisie.

Dans les formes de réalisation de l'implant illustrées aux figures 2 à 8, l'élément 2, qui est une tige 8 qui supportera une prothèse, et l'élément 3, de section constante et de préférence cylindrique, ont leurs axes longitudinaux 2' et 3' qui sont perpendiculaires. Comme montré aux figures 2, 3 et 6, la tige 8 est cylindrique et l'élément 3 présente un évidement 9 de section correspondante à celle de la tige 8, qui le traverse de part en part et qui est destiné à recevoir cette tige 8 à frottement doux. L'élément fermement maintenu par les corticales 6 de l'os, s'oppose à tout mouvement de la tige 8 de l'élément 2 suivant des directions transversales à son axe longitudinal 2' de sorte qu'un excellent ancrage de l'implant dans l'os est réalisé. L'axe de l'évidement 9 est perpendiculaire à l'axe 3' de l'élément 3 et, afin de limiter la rotation de cet élément 3 dans son logement pratiqué dans l'os pour placer le logement 9 en regard de la tige 8, on prévoit avantageusement, comme montré aux figures 2 et 3, un second évidement 9' d'axe perpendiculaire à celui du logement 9.

Ces logements sont pratiqués dans une partie pleine centrale 10 de l'élément 3 (figure 3) qui présente, de part et d'autre de cette partie pleine, des parties évidées 11 qui sont éventuellement tronçonnées pour être adaptées à l'épaisseur de l'os à l'endroit de la trépanation. L'élément 3 présente également, avantageusement, des cavités 12 (figure 7) régulièrement réparties à sa périphérie et communiquant avec les parties évidées 11, de sorte qu'après un certain temps l'os pénètre dans ces parties évidées et cavités et immobilise définitivement l'élément 3. Il est évident que les évidements 9 et 9' prévus dans cet élément 3 pourraient être utilisés pour stabiliser des tiges 8 transfixiant notamment l'os.

Pour immobiliser la tige 8 dans l'évidement 9, afin d'éviter tout déplacement de cette tige suivant son axe longitudinal, des moyens de blocage de ladite tige sont prévus sur l'élément 3. Ces moyens de blocage peuvent être constitués soit, comme montré à la figure 6, par une vis de pression 16 dont la tige 17, logée dans une des parties évidées 11, est vissée dans un des trous taraudés 18, prévus dans la partie pleine centrale 10 de l'élément 3, pour prendre appui sur la tige 8 afin de la bloquer dans l'évidement 9, la tête 18 de la vis pouvant prendre appui sur l'os lorsque la vis occupe sa position de blocage de la tige, soit par une vis dont la tige 17 s'engage dans une ouverture taraudée présentée par la tige 8 précitée.

Pour immobiliser le tige 8 de l'élément 2 suivant une direction parallèle à son axe longitudinal 2', le ou les évidements 9 et 9' de l'élément 3 peuvent avantageusement, comme montré à la figure 4, être taraudés, la tige 8 étant filetée afin de pouvoir être vissée sur l'élément 3 et immobilisée, suivant n'importe quelle direction, par rapport audit élément 3 et assurer avec ce dernier un ancrage particulièrement résistant de l'implant.

Cette résistance de l'ancrage peut encore être renforcée, comme montré à la figure 5, en prévoyant un écrou 13 vissé sur l'extrémité 14 de la partie filetée de la tige 8, en saillie par rapport à l'élément 3 et l'os, qui bloque cette partie de ladite tige dans l'évidement taraudé 9, 9' pratiqué dans l'élément 3. Pour stabiliser un élément cylindrique 3 et éviter qu'il tourne autour de son axe 3', on prévoit avantageusement au moins une aspérité extérieure 15, telle qu'une ailette. Dans le cas où l'élément 3 présente plusieurs aspérités, celles-ci sont régulièrement réparties à sa périphérie.

Pour mettre en place l'implant 1, on trépane l'os, en tiroir, à travers ses corticales latérales 6 ou sa corticale inférieure et/ou supérieure 6' (figure 5), suivant une direction transversale ou perpendiculaire à la direction suivant laquelle s'étendra l'axe longitudinal 2' de l'élément 2. On choisit un élément 3 dont la section correspond à celle du conduit réalisé par trépanation dans l'os et on adapte sa longueur à l'épaisseur de l'os et on dispose l'élément 2 pour qu'il coopère avec l'élément 3, soit par appui, soit par pénétration dans l'élément 3, ou encore par vissage dans ce dernier pour réaliser un ancrage multidirectionnel et cortical ou pluricortical de l'implant. En chirurgie dento-maxillaire, la trépanation, pour réaliser dans l'os le conduit dans lequel sera logé l'élément 3, sera avantageusement réalisée dans une zone située au-delà de la région apicale d'une ou de dents manquantes et là où les corticales sont les plus denses (basales, piliers, poutres osseuses).

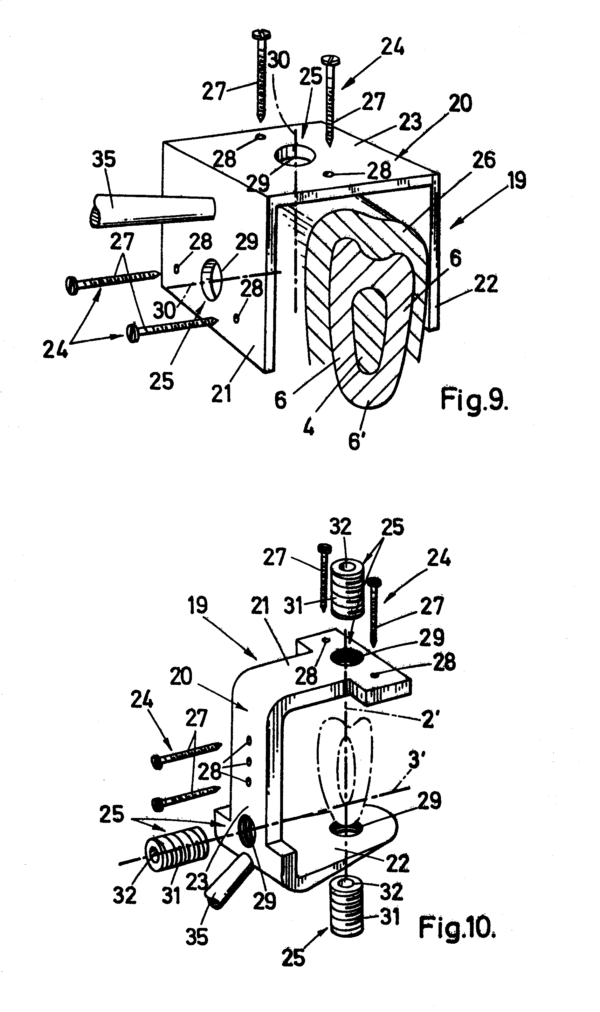

Le dispositif de guidage 19 suivant l'invention et illustré aux figures 9 à 13 comprend une pièce 20, rigide et indéformable, en forme de U dont les ailes 21 et 22, parallèles entre elles et perpendiculaires à l'âme 23, sont agencées pour pouvoir être disposées de part et d'autre de l'os à trépaner, au moins une de ces ailes 21, 22 et l'âme 23 du U présentant des moyens de fixation 24 de la pièce 20 par rapport à l'os et des moyens de guidage 25 du ou des trépans, utilisés pour réaliser les perforations dans l'os et dans lesquelles seront disposés la tige 8 supportant une prothèse et l'élément 3 coopérant avec cette tige, suivant deux directions transversales sécantes, directions suivant lesquelles s'étendront les deux éléments 2 et 3 qui constituent l'implant endo-osseux 1 et qui prennent appui l'un sur l'autre.

Dans la forme de réalisation du dispositif 19 illustrée à la figure 9, les ailes 21 et 22 de la pièce 20 sont agencées pour s'étendre de part et d'autre de l'os en regard des corticales 6 de ce dernier, tandis que l'âme 23 de la pièce surplombe la gencive 26.

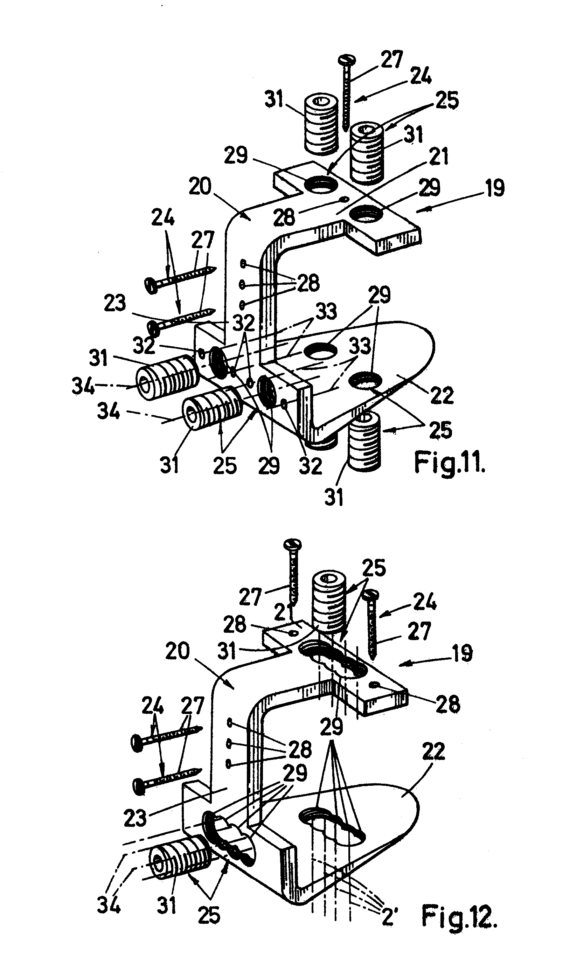

Par contre, le dispositif 19 illustré aux figures 10 à 13 a son aile 21 qui est agencée pour s'étendre en regard de la gencive et d'un côté de l'os, sensiblement perpendiculairement aux racines des dents et à l'axe 2' suivant lequel s'étendra l'élément 2, tandis que son aile 22 est profilée de manière à pouvoir être introduite, à travers la gencive 26, de l'autre côté de l'os, pour prendre appui sur la corticale inférieure 6' de celui-ci.

Les moyens de fixation 24 de la pièce 20, par rapport à l'os, sont constitués par des vis 27 coopérant chacune avec un trou taraudé 28 réalisé de part en part dans l'âme 23 (figure 9) ou dans l'aile 21 (figures 10 à 12) de la pièce 20 destinée à s'étendre en regard de la gencive et par des vis 27 coopérant chacune avec un trou taraudé 28 prévu de part en part, dans l'aile 21 (figure 9) ou dans l'âme 23 (figures 10 à 12). Les axes de ces trous taraudés 28 sont respectivement perpendiculaires aux ailes 21 et âme 23 susdits, tandis que les vis 27 ont une longueur telle qu'elles peuvent prendre appui sur l'os, à travers la gencive, pour immobiliser fermement la pièce 20, par rapport à l'os, suivant deux directions perpendiculaires.

Comme montré à la figure 9, les moyens de guidage 25 du trépan sont constitués par deux ouvertures cylindriques 29 réalisées chacune, de part en part, dans l'aile 21 de la pièce 20 et dans l'âme 23 de celle-ci. Les axes 30 des ouvertures 29 sont sécants et respectivement perpendiculaires aux aile 21 et âme 23 précitées. Les ouvertures cylindriques ont, dans cette forme de réalisation, des parois lisses et leur diamètre doit donc être adapté au diamètre des trépans qui seront utilisés pour réaliser les perforations dans lesquelles seront logés les éléments 2 et 3 de l'implant 1.

Dans les formes de réalisation du dispositif de guidage 19 illustrées aux figures 10 à 12, des moyens de guidage 25 du trépan sont également prévus dans l'aile 22 de la pièce 20 et sont coaxiaux aux moyens de guidage prévus dans l'aile 21, ces moyens de guidage permettant de trépaner l'os, à travers un incision cutanée sous-mentonnière, afin d'y loger, par exemple, un écrou, tel que l'écrou 13 précité, destiné à être vissé sur l'extrémité 14 de la partie filetée de la tige 8 pour bloquer l'élément 2 par rapport à l'élément 3.

Dans ces dernières formes de réalisation, lesdits moyens de guidage 25 comprennent des ouvertures cylindriques 29, de même diamètre, qui sont taraudées et qui sont destinées à recevoir des cylindres creux amovibles 31. Ces cylindres 31, dont les diamètres extérieurs sont égaux, ont des diamètres de leur évidement interne lisse 32 qui sont variables, de sorte que l'on peut, pour une même pièce 20, sélectionner des cylindres 31 dont l'évidement interne a un diamètre qui correspond exactement au diamètre externe du trépan à utiliser, ce qui permet un guidage parfait dudit trépan.

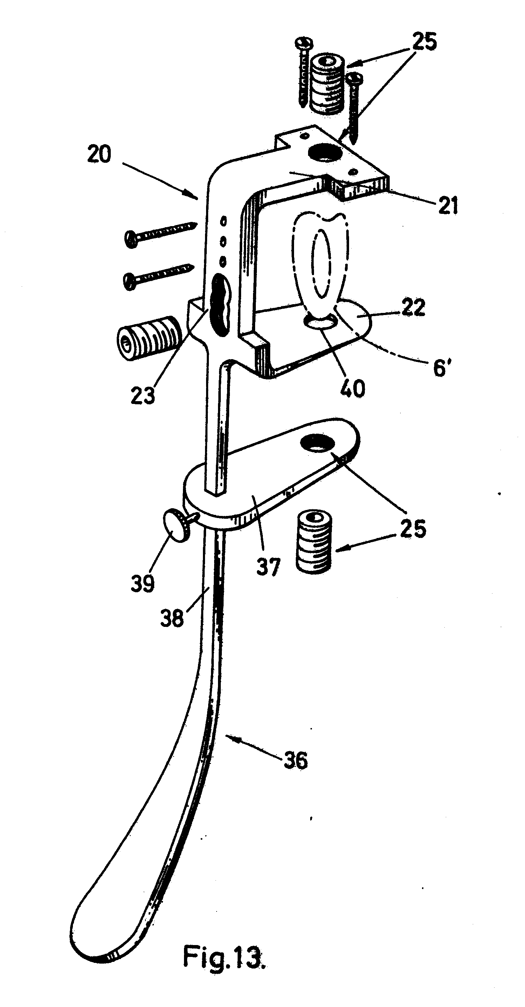

Il est évident, comme montré à la figure 11, que la pièce 20 peut présenter, suivant l'invention, plusieurs ouvertures 29 par aile (21, 22) et dans l'âme 23, ce qui a pour conséquence de permettre sans déplacement de la pièce 20, maintenue par les vis 27 des moyens de fixation 24, de tarauder l'os pour la pose de plusieurs implants 1. Pour permettre la mise en place des cylindres creux 31 avec une extrême précision, les moyens 25 peuvent également comprendre, comme montré à la figure 12, des ouvertures cylindriques 29 imbriquées les unes dans les autres, ce qui permet de réduire la distance qui sépare leurs axes 2' ou 34.

Comme montré à la figure 11, l'âme 23 de la pièce 20 comprend, de part et d'autre, des ouvertures cylindriques 29, une paire d'ouvertures cylindriques 32 dont les axes 33 sont parallèles à l'axe 34 de l'ouverture correspondante 29 et équidistants de cet axe. Ces ouvertures 32 permettent la perforation de l'os de part et d'autre de la perforation réalisée à travers l'ouverture 29 et dans laquelle sera logé l'élément 3 de l'implant. Ces diverses perforations étant ensuite réunies entre elles pour dégager dans l'os des emplacements permettant de loger des ailettes 15 présentées par l'élément 3 susdit. Pour faciliter les manipulations de la pièce 20, celle-ci est munie d'une poignée de maintien 35 qui est avantageusement amovible. Pour permettre diverses positions de cette poignée amovible 35 par rapport à la pièce 20, cette dernière présente avantageusement plusieurs endroits de fixation de ladite poignée répartis sur l'aile 21 at l'âme 23 de cette pièce 20.

Dans la forme de réalisation du dispositif illustré à la figure 13, celui-ci comprend toujours la pièce 20 en forme de U dont l'aile 22 a une épaisseur réduite au minimum afin de pouvoir être aisément introduite, à travers la gencive, pour prendre appui sur la corticale inférieure 6' de l'os. Pour faciliter la mise en position correcte de la pièce 20 par rapport à l'os et faciliter de ce fait la pose d'implants parallèles, le dispositif comprend une poignée de maintien 36 qui est fixe ou amovible par rapport à la pièce 20 et qui s'étend dans le prolongement de l'âme 23 de ladite pièce 20. Cette poignée 36 support une plaque 37, parallèle aux ailes 21 et 22 de la pièce 20, qui peut coulisser librement le long de la portion 38 de la poignée 36, la section de cette portion 38 étant telle que la plaque 37 ne peut pas se déplacer, par rotation, autour de ladite portion 38. La plaque 37 présente une vis de pression 39 qui peut prendre appui sur la portion 38 pour immobiliser la plaque 37, par rapport à cette dernière, en position choisie en regard d'une incision cutanée sous-mentonnière qui permettra de trépaner l'os grâce aux moyens de guidage 25 du trépan, tels que décrits ci-avant, ces moyens de guidage 25 étant coaxiaux aux moyens de guidage 25 prévus sur l'aile 21 de la pièce 20. Pour permettre le libre passage du trépan, l'aile 22 de ladite pièce 20 présente une ouverture 40 qui est coaxiale aux moyens de guidage 25 prévus sur l'aile 21 et la plaque 37.

Il doit être entendu que l'invention n'est nullement limitée aux formes de réalisation décrites et que bien des modifications peuvent être apportées à ces dernières sans sortir du cadre du présent brevet.

C'est ainsi que l'élément 3 peut présenter n'importe quelle section, tandis que l'élément 2 peut être constitué par l'un ou l'autre implant prothétique connu. Dans le cas de résorption extrême de la mandibule, la hauteur de l'élément 3 devra être réduite au minimum.

**Revendications**

1. Implant endo-osseux (1) utilisé en chirurgie osseuse, en particulier en chirurgie dento-maxillaire, caractérisé en ce qu'il est constitué d'au moins deux éléments (2, 3) destinés à être au moins partiellement noyés dans l'os, l'un de ces éléments, qui s'étendent suivant deux directions transversales et prennent appui l'un sur l'autre, étant soit une tige (8) sur laquelle est fixée une prothèse, soit un implant prothétique (2).

2. Implant suivant la revendication 1, caractérisé en ce que l'élément (3) avec lequel coopère la tige ou l'implant prothétique (2) susdit présente au moins un évidement (9) dans lequel s'engage une des extrémités de la tige (8) ou de l'implant prothétique (2).

3. Implant suivant la revendication 2, caractérisé en ce que la section de l'extrémité susdite de la tige (8) ou de l'implant prothétique (2) est sensiblement égale à la section correspondante de l'évidement (9) susdit, ces sections étant telles que l'extrémité de la tige ou de l'implant prothétique peut coulisser dans l'évidement à frottement doux.

4. Implant suivant la revendication 3, caractérisé en ce que l'élément (3) comprend des moyens de blocage de la tige (8) ou de l'implant (2) dans l'évidement (9).

5. Implant suivant la revendication 2, caractérisé en ce que l'évidement (9) susdit est taraudé, l'extrémité précitée de la tige ou de l'implant prothétique étant filetée de manière à pouvoir être vissée dans l'évidement présenté par l'élément (3) avec lequel la tige coopère.

6. Implant suivant l'une quelconque des revendications 2 à 5, caractérisé en ce que l'évidement (9) susdit traverse l'élément (3) de part en part.

7. Implant suivant la revendication 6, caractérisé en ce que l'extrémité de la tige ou de l'implant prothétique introduite dans l'évidement (9) susdit traverse l'élément (3), dans lequel l'évidement est pratiqué de part en part et fait saillie par rapport à ce dernier, l'extrémité (14) de la tige (8) ou de l'implant prothétique (2) en saillie étant filetée et sortant de l'os, un écrou (13) étant prévu pour coopérer avec cette extrémité et prendre appui sur l'os pour immobiliser fermement la tige ou l'implant prothétique par rapport à l'élément (3) et à l'os.

8. Implant suivant l'une quelconque des revendications 1 à 7, caractérisé en ce que les axes longitudinaux (2' et 3') de la tige (8) ou de l'implant prothétique (2) et de l'élément (3) sont sensiblement perpendiculaires.

9. Implant suivant l'une quelconque des revendications 1 à 8, caractérisé en ce que l'élément (3) susdit est partiellement creux suivant son axe longitudinal (3').

10. Implant suivant l'une quelconque des revendications 1 à 9, caractérisé en ce que l'élément (3) présente des cavités (12) régulièrement réparties à sa périphérie.

11. Implant suivant la revendication 10, caractérisé en ce que les cavités (12) susdites communiquent avec le creux (11) présenté par l'élément.

12. Implant suivant l'une quelconque des revendications 1 à 11, caractérisé en ce que l'élément (3) présente extérieurement au moins une aspérité (15), telle qu'ailette, s'étendant transversalement à l'axe longitudinal (3') de l'élément.

13. Implant suivant l'une quelconque des revendications 1 à 12, caractérisé en ce que l'élément est soit cylindrique ou semi-cylindrique, soit constitué de corps cylindriques associés entre eux.

14. Procédé pour la mise en place de l'implant suivant l'une quelconque des revendications 1 à 13, caractérisé en ce qu'il consiste à trépaner l'os "en tiroir", suivant une direction transversale à celle suivant laquelle s'étendra l'axe longitudinal (2') de la tige (8) ou de l'implant prothétique (2) susdit, pour que cette trépanation soit practiquée soit dans la zone médullaire (5) de l'os et dans ses corticales (6), soit dans la corticale de l'os, à choisir un élément (3) d'une longueur telle qu'il soit au moins en grande partie noyé dans l'os, et à disposer la tige (8) ou l'implant prothétique (2) dans ce dernier, par exemple par trépanation, pour qu'il coopère avec l'élément (3) afin de réaliser un ancrage multidirectionnel et cortical ou pluricortical de l'implant.

15. Procédé suivant la revendication 14, caractérisé en ce que, en chirurgie dento-maxillaire, on effectue la trépanation pour placer l'élément (3) susdit dans une zone située au-delà de la région apicale d'une ou de dents manquantes, et là où les corticales (6) sont les plus denses : basales, piliers, poutres osseuses,...

16. Dispositif de guidage (19) pour la réalisation des trépanations permettant la mise en place de l'implant (1) suivant l'une quelconque des revendications 1 à 13 et pour la mise en oeuvre du procédé suivant l'une ou l'autre des revendications 14 et 15, caractérisé en ce qu'il comprend une pièce (20) rigide et indéformable en forme de U dont les ailes (21, 22), parallèles entre elles et perpendiculaires à l'âme (23), sont agencées pour pouvoir être disposées de part et d'autre de l'os à trépaner, au moins une des ailes (21, 22) susdites et l'âme (23) du U présentant, d'une part, des moyens de fixation (24) de la pièce (20) par rapport à l'os et, d'autre part, des moyens de guidage (25) de trépan suivant deux directions transversales sécantes, directions suivant lesquelles s'étendront les deux éléments (2, 3) précités qui constituent l'implant endo-osseux et qui prennent appui l'un sur l'autre.

17. Dispositif suivant la revendication 16, caractérisé en ce qu'une des ailes susdites de la pièce (20) est agencée pour s'étendre en regard de la gencive et d'un côté de l'os, sensiblement perpendiculairement aux racines des dents et à l'axe (2') suivant lequel s'étendra l'élément (2) précité constitué soit par une tige à laquelle est fixée une prothèse, soit par un implant prothétique, l'autre aile (22) de la pièce étant profilée de manière à pouvoir être introduite à travers la gencive (26) de l'autre côté de l'os, pour prendre appui sur la corticale inférieure (6') de ce dernier.

18. Dispositif suivant la revendication 17, caractérisé en ce que les moyens de fixation (24) de la pièce (20) précitée par rapport à l'os sont constitués par au moins une vis (27) coopérant avec un trou taraudé (28) réalisé de part en part dans l'aile (21) de la pièce destinée à s'étendre en regard de la gencive et par au moins une vis (27) coopérant avec un trou taraudé (28) prévu, de part en part, dans l'âme (23) de la pièce, les axes de ces trous taraudés (28) étant respectivement perpendiculaires à l'aile (21) et à l'âme (23) susdites tandis que les vis (27) ont une longueur telle qu'elles peuvent prendre appui sur l'os, à travers la gencive, pour immobiliser fermement la pièce par rapport à ce dernier.

19. Dispositif suivant l'une ou l'autre des revendications 17 et 18, caractérisé en ce que les moyens de guidage du trépan sont constitués par au moins une ouverture cylindrique (29) réalisée de part en part dans l'aile (21) de la pièce destinée à s'étendre en regard de la gencive et par au moins une ouverture cylindrique (29) réalisée de part en part dans l'âme (23) de ladite pièce, les axes (30) de ces ouvertures (29) étant sécants, et respectivement perpendiculaires à l'aile et à l'âme précitées.

20. Dispositif suivant la revendication 19, caractérisé en ce que les ouvertures cylindriques (29) sont taraudés et sont destinées à recevoir des cylindres creux amovibles (31) filetés extérieurement, le diamètre de l'évidement interne lisse de ces cylindres creux étant variable afin de pouvoir utiliser un cylindre creux dont l'évidement interne a un diamètre qui correspond exactement au diamètre externe du trépan à utiliser.

21. Dispositif suivant l'une quelconque des revendications 16 à 20, caractérisé en ce que les deux ailes (21, 22) de la pièce (20) présentent des moyens de guidage (25) du trépan, ces moyens étant coaxiaux.

22. Dispositif suivant l'une quelconque des revendications 19 à 20, caractérisé en ce que de part et d'autre de l'ouverture cylindrique (29) réalisée de part en part dans l'âme (23) de la pièce (20) est prévue au moins une paire d'ouvertures cylindriques (32) dont les axes (33) sont parallèles à l'axe (34) de l'ouverture précitée (29) et équidistants de ce dernier axe (34).

23. Dispositif suivant l'une quelconque des revendications 16 à 22, caractérisé en ce que la pièce comprend une poignée de maintien amovible (35), plusieurs endroits de fixation de cette poingée étant de préférence prévus sur ladite pièce (20).

24. Dispositif suivant l'une quelconque des revendications 16 à 20, caractérisé en ce que la pièce (20) comprend une poignée de maintien (36) fixe ou amovible s'étendant sensiblement dans le prolongement de l'âme (23) de ladite pièce (20), cette poignée (36) supportant une plaque (37), parallèle aux ailes (21, 22) de la pièce (20), pouvant coulisser librement le long de la portion (38) de la poignée (36) dont la section est telle que la plaque (37) ne peut pas tourner autour de cette portion, une vis de pression (39) étant prévue sur ladite plaque afin de pouvoir prendre appui sur ladite portion (38) pour immobiliser la plaque (37) en position choisie par rapport à cette dernière, ladite plaque présentant des moyens de guidage (25) du trépan qui sont coaxiaux aux moyens de guidage (25) prévus sur l'aile (21) précitée, l'aile (22) de la pièce (20) présentant une ouverture (40) coaxiale à ces derniers moyens (25) et destinée à livrer librement passage au trépan.

86870078 2

Fig.1.

Fig.2.

Fig.3.

Fig.4.

Fig.5.

Fig.6.

Fig.7.

Fig.8.

Fig.9.

Fig.10.

Fig.11.

Fig.12.

Fig.13.